# EUROPEAN PATENT APPLICATION

(11) **EP 4 375 127 A1**
(43) Date of publication of application: **29.05.2024**
(21) Application number: 23208403.8
(22) Date of filing: 07.11.2023
(51) Int. Cl.: B60L 53/65, B60L 53/66, B60L 53/80, G06Q 10/0631, G06Q 50/06, B60L 58/16

(54) **METHOD OF CONTROLLING BATTERY REPLACEMENT AND BATTERY REPLACEMENT CONTROL SYSTEM**

(30) Priority: 22.11.2022 JP 2022186792
(71) Applicant: TOYOTA JIDOSHA KABUSHIKI KAISHA, Toyota-shi, Aichi-ken, 471-8571 (JP)
(72) Inventor: MURATA, Soshiro, TOYOTA-SHI, AICHI-KEN, 471-8571 (JP); UMENO, Hiroshi, TOYOTA-SHI, AICHI-KEN, 471-8571 (JP); NOMURA, Takahiro, TOYOTA-SHI, AICHI-KEN, 471-8571 (JP); ONOZUKA, Yuya, TOYOTA-SHI, AICHI-KEN, 471-8571 (JP)
(74) Representative: Cabinet Beau de Loménie

(57) **Abstract**

A method of controlling battery replacement includes receiving from a user of an electrically powered vehicle (10), a request for registration as a home station, of a specific battery replacement station among a plurality of battery stations (20) (battery replacement stations) and determining a first incentive to be granted to the user when the user uses the home station for battery replacement of the electrically powered vehicle (10). The determining the first incentive includes setting the first incentive to be greater than a second incentive to be granted to the user when the user uses a battery station (20) other than the home station for battery replacement of the electrically powered vehicle (10).

## Description

### CROSS REFERENCE TO RELATED APPLICATIONS

This nonprovisional application is based on Japanese Patent Application No. 2022-186792 filed with the Japan Patent Office on November 22, 2022, the entire contents of which are hereby incorporated by reference, and to which the skilled person can refer to when considering the present disclosure.

### BACKGROUND

### Field

The present disclosure relates to a method of controlling battery replacement and a battery replacement control system.

### Description of the Background Art

Chinese Patent Publication No. 109670661A discloses a system that makes a plan for charging of a battery within a battery station based on scheduled time of arrival of an electrically powered vehicle at the battery station.

### SUMMARY

When the electrically powered vehicle has not booked the battery station in the system as disclosed in Chinese Patent Publication No. 109670661A, it is difficult to determine which battery station the electrically powered vehicle is going to use. For example, even when batteries have been charged at a battery station, the electrically powered vehicle may not use this battery station. A system and a method that can facilitate prediction of a battery station (battery replacement station) that an electrically powered vehicle is going to use have been demanded.

The present disclosure was made to solve the problem above, and an object thereof is to provide a method of controlling battery replacement and a battery replacement control system that can facilitate prediction of a battery replacement station that an electrically powered vehicle is going to use.

A method of controlling battery replacement according to a first aspect of the present disclosure is a method of controlling battery replacement at a plurality of battery replacement stations each equipped with a battery that replaces a battery mounted on at least one electrically powered vehicle. The battery equipped at each of the plurality of battery replacement stations is a first battery. The battery mounted on the at least one electrically powered vehicle is a second battery. The method includes receiving from a user of the electrically powered vehicle, a request for registration as a home station, of a specific battery replacement station among the plurality of battery replacement stations and determining a first incentive to be granted to the user when the user uses the home station for battery replacement of the electrically powered vehicle. The determining a first incentive includes setting the first incentive to be greater than a second incentive to be granted to the user when the user uses a battery replacement station other than the home station for battery replacement of the electrically powered vehicle.

In the method of controlling battery replacement according to the first aspect of the present disclosure, the first incentive is set to be greater than the second incentive as set forth above. The user of the electrically powered vehicle thus tends to mainly use the home station where the user can obtain the relatively great first incentive. Consequently, the battery replacement station that the electrically powered vehicle is going to use can readily be predicted.

In the method of controlling battery replacement according to the first aspect, preferably, the determining a first incentive includes setting the first incentive to be granted to be greater for a battery replacement station registered as the home station in fewer electrically powered vehicles. According to such a configuration, a battery replacement station registered as the home station in few electrically powered vehicles can readily be registered in a larger number of electrically powered vehicles (the number of such electrically powered vehicles can readily be increased; such electrically powered vehicles being referred to as registration vehicles). Consequently, variation in number of registration vehicles among the plurality of battery replacement stations can be suppressed. Congestion of a specific battery replacement station can thus be suppressed.

The method of controlling battery replacement according to the first aspect preferably further includes rejecting the request when the request is received, the request being directed to a battery replacement station registered as the home station in other electrically powered vehicles, the number of other electrically powered vehicles being larger than a prescribed first number threshold value. According to such a configuration, further increase in number of registration vehicles of the battery replacement station registered as the home station in other electrically powered vehicles, the number of other electrically powered vehicles being larger than the prescribed first number threshold value, can be suppressed. Consequently, congestion of the specific battery replacement station can further be suppressed.

The method of controlling battery replacement according to the first aspect preferably further includes giving the user a notification that encourages registration as the home station, of a battery replacement station a frequency of use of which by the user is higher than a prescribed frequency threshold value. According to such a configuration, the number of users who register the battery replacement station relatively low in frequency of use as the home station can be increased. Consequently, the frequency of use of the battery replacement station relatively low in frequency of use due to increase in number of registration vehicles can be increased. Variation in frequency of use among the battery replacement stations can thus be lessened.

The method of controlling battery replacement according to the first aspect preferably further includes giving the user a notification when a battery replacement station registered as the home station in other electrically powered vehicles, the number of other electrically powered vehicles being smaller than a prescribed second number threshold value, is used or booked, the notification being a notification that encourages registration of the used or booked battery replacement station as the home station. According to such a configuration, a battery replacement station registered as the home station in other electrically powered vehicles, the number of other electrically powered vehicles being smaller than the prescribed second number threshold value, can readily be registered in a larger number of electrically powered vehicles (the number of such electrically powered vehicles can readily be increased; such electrically powered vehicles being referred to as registration vehicles). Consequently, variation in number of registration vehicles among the plurality of battery replacement stations can further be suppressed.

A battery replacement control system according to a second aspect of the present disclosure includes a first processing apparatus that performs processing for replacing a first battery mounted on at least one electrically powered vehicle and a second battery stored at each of a plurality of battery replacement stations with each other and a second processing apparatus that receives from a user of the electrically powered vehicle, a request for registration as a home station, of a specific battery replacement station among the plurality of battery replacement stations and determines a first incentive to be granted to the user when the first processing apparatus causes replacement of the second battery at the home station and the first battery with each other. The second processing apparatus sets the first incentive to be greater than a second incentive to be granted to the user when the first processing apparatus causes replacement of the second battery at a battery replacement station other than the home station and the first battery with each other.

In the battery replacement control system according to the second aspect of the present disclosure, the first incentive is set to be greater than the second incentive as set forth above. A battery replacement control system capable of readily predicting a battery replacement station to be used by an electrically powered vehicle can thus be provided.

In the battery replacement control system according to the second aspect, preferably, the second processing apparatus controls the first processing apparatus such that a degree of deterioration of the second battery that replaces the first battery of the electrically powered vehicle based on the first incentive is lower than a degree of deterioration of the second battery that replaces the first battery of the electrically powered vehicle based on the second incentive. According to such a configuration, a frequency of use of the home station by a user of the electrically powered vehicle in which the battery has deteriorated can readily be set to be higher than a frequency of use by the user of a battery replacement station other than the home station.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing a configuration of a control system according to one embodiment.
Fig. 2 is a first diagram showing sequence control in the control system according to one embodiment.
Fig. 3 is a second diagram showing sequence control in the control system according to one embodiment.
Fig. 4 is a third diagram showing sequence control in the control system according to one embodiment.
Fig. 5 is a diagram showing relation between a first incentive and a second incentive.

### DESCRIPTION OF THE PREFERRED EMBODIMENTS

An embodiment of the present disclosure will be described in detail below with reference to the drawings. The same or corresponding elements in the drawings have the same reference characters allotted and description thereof will not be repeated.

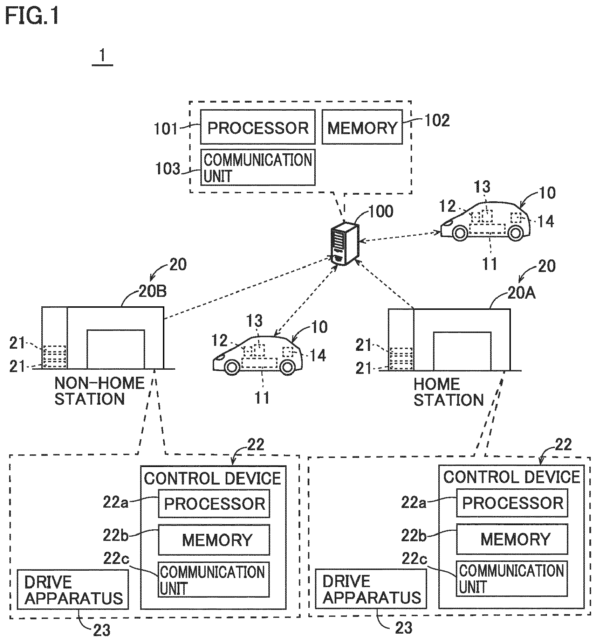

Fig. 1 is a diagram showing a configuration of a battery replacement control system 1 according to the present embodiment. Control system 1 includes a server 100, a plurality of electrically powered vehicles 10, and a plurality of battery stations 20. Control system 1 and battery station 20 are an exemplary "battery replacement control system" and an exemplary "battery replacement station" in the present disclosure, respectively. Server 100 is an exemplary "second processing apparatus" in the present disclosure.

Electrically powered vehicle 10 includes a battery 11, a navigation system 12, an electronic control unit (ECU) 13, and a communication instrument 14. The plurality of electrically powered vehicles 10 may be identical in configuration to each other. Battery 11 represents an exemplary "first battery" in the present disclosure.

Battery 11 supplies electric power to various electrical components such as a not-shown motor for travel of electrically powered vehicle 10. ECU 13 controls various electrical components of electrically powered vehicle 10 including navigation system 12 and communication instrument 14. Communication instrument 14 and server 100 can communicate with each other. Server 100 may communicate with a not-shown portable terminal or the like owned by a user of electrically powered vehicle 10.

Battery station 20 includes a plurality of batteries 21 that replace battery 11 of electrically powered vehicle 10. Battery station 20 is provided at a position different from server 100. Battery 21 represents an exemplary "second battery" in the present disclosure.

The plurality of battery stations 20 include a battery station 20A and a battery station 20B. Battery station 20A and battery station 20B are identical to each other in configuration. Contents in a part of the description below referring simply to "battery station 20" are contents common to battery station 20A and battery station 20B.

A user of electrically powered vehicle 10 can register one of the plurality of battery stations 20 as the home station. In the present embodiment, it is assumed that battery station 20A is registered as the home station and battery station 20B is not registered as the home station. The home station means battery station 20 mainly used by the user for battery replacement.

Battery station 20 includes a control device 22 and a drive apparatus 23. Control device 22 represents an exemplary "first processing apparatus" in the present disclosure.

Control device 22 includes a processor 22a, a memory 22b, and a communication unit 22c. Not only a program to be executed by processor 22a but also information (for example, a map, a mathematical expression, and various parameters) to be used in the program are stored in memory 22b. Processor 22a controls drive apparatus 23.

Communication unit 22c includes various communication I/Fs. Processor 22a controls communication unit 22c. Communication unit 22c communicates with server 100.

Control device 22 processes battery replacement at battery station 20 by controlling drive apparatus 23 (to drive). Specifically, drive apparatus 23 includes a movement mechanism that finely adjusts a position of electrically powered vehicle 10 to a battery replacement position, a lifting mechanism that moves up and down electrically powered vehicle 10, a mechanism that replaces batteries, and the like. Detailed description and illustration of each mechanism will not be given herein.

Server 100 is a server that manages (controls) battery replacement of electrically powered vehicle 10 at each of the plurality of battery stations 20. Server 100 includes a processor 101, a memory 102, and a communication unit 103.

Server 100 (processor 101) receives from a user of electrically powered vehicle 10, a request for registration as the home station, of specific battery station 20 among the plurality of battery stations 20. In addition, processor 101 determines a first incentive to be granted to the user when control device 22 of the home station performs processing for replacing battery 21 at the home station and battery 11 with each other (that is, when battery station 20A is used).

Not only a program to be executed by processor 101 but also information (for example, a map, a mathematical expression, and various parameters) to be used in the program are stored in memory 102. Position information of battery station 20 is stored in memory 102. Processor 101 controls communication unit 103. Communication unit 103 includes various communication I/Fs.

In the conventional control system, when an electrically powered vehicle has not booked a battery station, it is difficult to determine which battery station the electrically powered vehicle is going to use. For example, even when batteries have been charged at a battery station, the electrically powered vehicle may not use this battery station. A system and a method that can facilitate prediction of a battery station that an electrically powered vehicle is going to use have been demanded.

In the present embodiment, server 100 (processor 101) sets the first incentive corresponding to use of the home station to be greater than a second incentive to be granted to the user when control device 22 of battery station 20 other than the home station causes replacement of battery 21 at battery station 20B and battery 11 with each other (that is, when battery station 20B is used).

### (Sequence Control in Control System)

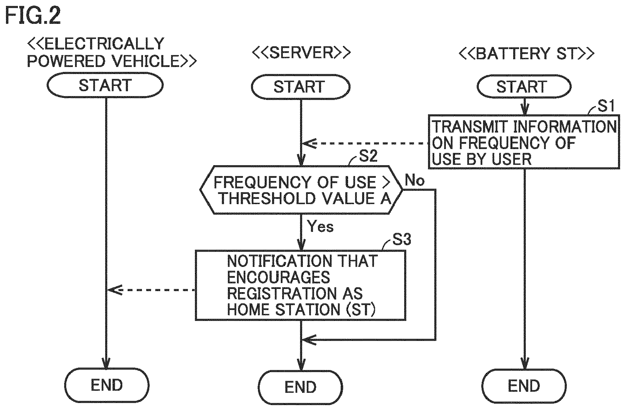

Exemplary sequence control in control system 1 in the present embodiment will now be described with reference to Figs. 2 to 4. The sequence control in Figs. 2 to 4 is sequence control between a specific user (electrically powered vehicle 10), and server 100 and battery station 20.

In step S1, each of the plurality of battery stations 20 (processors 22a) transmits through communication unit 22c to server 100, information on a frequency of use of that battery station by specific electrically powered vehicle 10 (user). Server 100 (processor 101) thus obtains the information on the frequency of use of each of the plurality of battery stations 20 by the user. Server 100 may periodically (continually) obtain the information on the frequency of use. Alternatively, server 100 may obtain the information on the frequency of use through the Internet, without receiving the information from battery station 20. The information on the frequency of use may be stored in memory 102 of server 100.

In step S2, server 100 (processor 101) determines whether or not the frequency of use corresponding to each of the plurality of battery stations 20 is higher than a prescribed threshold value A (for example, three times in one past week). When there is battery station 20 the frequency of use of which is higher than threshold value A (in the case of Yes in S2), the process proceeds to step S3. When there is no battery station 20 the frequency of use of which is higher than threshold value A (in the case of No in S2), the process ends. Threshold value A may be set to a frequency other than three times in one past week as above. Threshold value A represents an exemplary "prescribed frequency threshold value" in the present disclosure.

In this case, in step S3, server 100 (processor 101) gives through communication unit 103 to the user, a notification that encourages registration as the home station, of battery station 20 the frequency of use of which is higher than threshold value A. In other words, processor 101 recommends as the home station to the user, battery station 20 the frequency of use of which is higher than threshold value A. Server 100 (processor 101), on the other hand, does not give the user a notification that encourages registration as the home station, of battery station 20 the frequency of use of which is equal to or lower than threshold value A. The notification is shown on navigation system 12 of electrically powered vehicle 10 or a not-shown portable terminal or the like of the user.

When the frequency of use corresponding to each of the plurality of battery stations 20 is higher than threshold value A, a plurality of battery stations 20 the frequency of use of which is higher than threshold value A may be recommended as the home stations. In this case, only battery station 20 more readily available to the user may be recommended as the home station based on an address of the user of electrically powered vehicle 10, a history of a travel route of electrically powered vehicle 10, or the like.

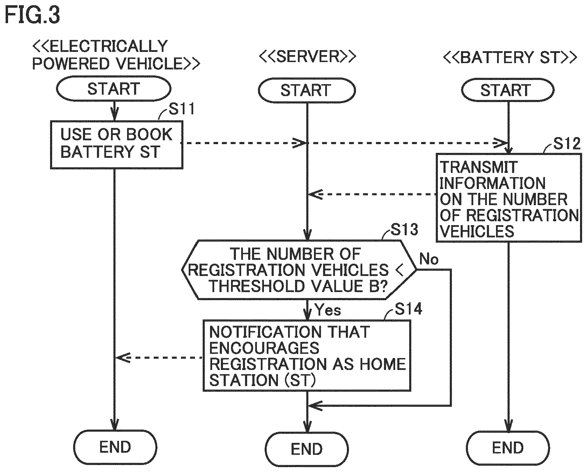

Fig. 3 will now be described. It is assumed that a specific user (electrically powered vehicle 10) used or booked battery station 20 in step S11. Information on booking of the battery station may be given through server 100 to battery station 20.

In step S12, battery station 20 (processor 22a) used or booked by the user in step S11 transmits through communication unit 22c to server 100, information on the number of electrically powered vehicles 10 (other electrically powered vehicles 10) where (that battery station 20) is registered as the home station. Server 100 (processor 101) thus obtains information on the number of registration vehicles corresponding to battery station 20. Server 100 may periodically (continually) obtain the information on the number of registration vehicles from each of the plurality of battery stations 20, without being triggered by the processing in step S11. Alternatively, server 100 may obtain the information on the number of registration vehicles through the Internet, without receiving the information from battery station 20. The information on the number of registration vehicles may be stored in memory 102 of server 100.

In step S13, server 100 (processor 101) determines whether or not the number of electrically powered vehicles 10 (other electrically powered vehicles 10) where battery station 20 used or booked by the user in step S11 is registered as the home station is smaller than a prescribed threshold value B (for example, five). When the number is smaller than threshold value B, the process proceeds to step S14. When the number is equal to or larger than threshold value B, the process ends. Threshold value B represents an exemplary "second number threshold value" in the present disclosure.

In step S14, server 100 (processor 101) gives through communication unit 103 to the user, a notification that encourages registration of used or booked battery station 20 as the home station. In other words, processor 101 recommends used or booked battery station 20 as the home station to the user.

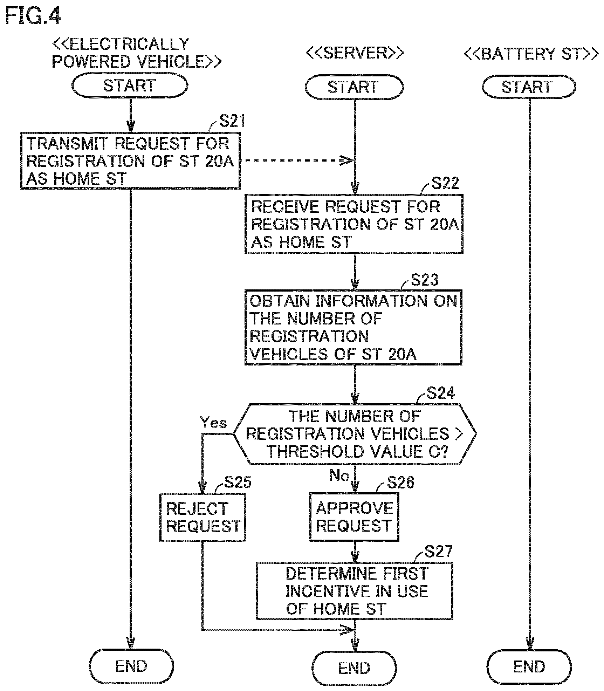

Fig. 4 will now be described. In step S21, the user of electrically powered vehicle 10 transmits to server 100, for example, information (a signal) indicating a request for registration of battery station 20A as the home station.

In step S22, server 100 (communication unit 103) receives the information (signal) transmitted in step S21. Server 100 (communication unit 103) thus receives the request corresponding to step S21 from the user.

In step S23, server 100 obtains information on the number (the number of registration vehicles) of electrically powered vehicles 10 (other electrically powered vehicles 10) where battery station 20A is registered as the home station. For example, server 100 may obtain through communication unit 103, the information on the number of registration vehicles from battery station 20A. Alternatively, server 100 may obtain the information on the number of registration vehicles through the Internet. The information on the number of registration vehicles may be stored in memory 102 of server 100.

In step S24, server 100 (processor 101) determines whether or not the number (the number of registration vehicles) obtained in step S23 is larger than a prescribed threshold value C (for example, five). When the number (the number of registration vehicles) is larger than threshold value C (in the case of Yes in step S24), the process proceeds to step S25. When the number (the number of registration vehicles) is equal to or smaller than threshold value C (in the case of No in step S24), the process proceeds to step S26. Threshold value C represents an exemplary "first number threshold value" in the present disclosure.

In step S25, server 100 (processor 101) rejects the request received in step S22. Thereafter, the process ends.

In step S26, server (processor 101) approves the request received in step S22. Thereafter, the process proceeds to step S27.

In step S27, server 100 (processor 101) determines the first incentive to be granted to the user when the user uses the home station (20A) for battery replacement of electrically powered vehicle 10.

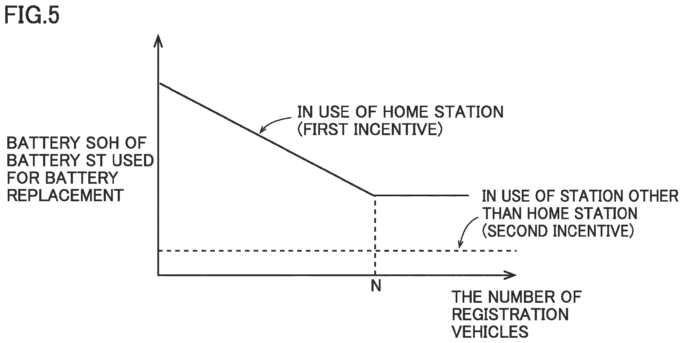

Specifically, as shown in Fig. 5, processor 101 sets the first incentive to be greater than the second incentive to be granted to the user when the user uses battery station 20 (20B) other than the home station for battery replacement of electrically powered vehicle 10.

Specifically, processor 101 sets states of health (SOH) of battery 21 that replaces battery 11 in use of the home station to be higher than the SOH (for example, 50% on average) of battery 21 that replaces battery 11 in use of battery station 20 other than the home station. In other words, processor 101 controls control device 22 of each battery station 20 (20A and 20B) such that battery 11 is replaced with battery 21 lower in degree of deterioration in use of the home station than in use of battery station 20 other than the home station.

Processor 101 sets the first incentive (the SOH of battery 21) to be granted to be greater for a battery replacement station registered as the home station in fewer electrically powered vehicles. Specifically, the SOH linearly lowers with increase in number of registration vehicles within a range where the number of registration vehicles is equal to or smaller than N (for example, twenty). In the range where the number of registration vehicles is equal to or smaller than N (for example, twenty), the SOH may lower exponentially or stepwise (in steps) with increase in number of registration vehicles.

The SOH has a constant value in a range where the number of registration vehicles is larger than N. The constant value (a minimum value of the SOH) is larger than the SOH (see a horizontally drawn dashed line in Fig. 5) corresponding to the second incentive. In the range where the number of registration vehicles is larger than N, the SOH may vary (lower) with increase in number of registration vehicles.

The SOH above is merely a reference value. Battery 21 having the SOH closest to the SOH corresponding to the first incentive determined by processor 101 among the plurality of batteries 21 replaces battery 11 of electrically powered vehicle 10.

As set forth above, the first incentive to be granted to the user when the user uses the home station is set to be greater than the second incentive to be granted to the user when the user uses battery station 20 other than the home station. The frequency of use by the user of battery station 20 other than the home station among the plurality of battery stations 20 can thus be lowered. Consequently, battery station 20 that electrically powered vehicle 10 is going to use can readily be predicted.

Though an example in which the granted first incentive is greater for battery station 20 registered as the home station in fewer electrically powered vehicles 10 is shown in the embodiment, the present disclosure is not limited as such. For example, regardless of the number of electrically powered vehicles 10 where the battery station is registered as the home station, the granted first incentive may be constant.

Though an example in which the request is rejected when the request is received, the request being directed to battery station 20 registered as the home station in other electrically powered vehicles, the number of which is larger than threshold value C, is shown in the embodiment, the present disclosure is not limited as such. The request may be approved also in the case above. Specifically, processing in steps S23 to S25 (S26) shown in Fig. 4 does not have to be performed.

Though an example in which magnitude of the incentive is defined by magnitude of the SOH of battery 21 is shown in the embodiment, the present disclosure is not limited as such. For example, the magnitude of the incentive may be defined by magnitude of an amount of discount of a fee required for battery replacement or magnitude of a point given to the user.

Though an embodiment of the present disclosure has been described, it should be understood that the embodiment disclosed herein is illustrative and non-restrictive in every respect. The scope of the present disclosure is defined by the terms of the claims and is intended to include any modifications within the scope and meaning equivalent to the terms of the claims.

## Claims

1. A method of controlling battery replacement at a plurality of battery replacement stations (20) each equipped with a battery (21) for replacing a battery (11) mounted on at least one electrically powered vehicle (10), the battery (11) mounted on the at least one electrically powered vehicle being a first battery (11), the battery (21) equipped at each of the plurality of battery replacement stations (20) being a second battery (21), the method comprising:
receiving from a user of the electrically powered vehicle (10), a request for registration as a home station, of a specific battery replacement station (20) among the plurality of battery replacement stations (20); and
determining a first incentive to be granted to the user when the user uses the home station for battery replacement of the electrically powered vehicle (10), wherein
the determining a first incentive includes setting the first incentive to be greater than a second incentive to be granted to the user when the user uses a battery replacement station (20) other than the home station for battery replacement of the electrically powered vehicle (10).

2. The method of controlling battery replacement according to claim 1, wherein
the determining a first incentive includes setting the first incentive to be granted to be greater for a battery replacement station (20) registered as the home station in fewer electrically powered vehicles (10).

3. The method of controlling battery replacement according to claim 1 or 2, further comprising rejecting the request when the request is received, the request being directed to a battery replacement station (20) registered as the home station in other electrically powered vehicles (10), the number of other electrically powered vehicles (10) being larger than a prescribed first number threshold value (C).

4. The method of controlling battery replacement according to claim 1 or 2, further comprising giving the user a notification that encourages registration as the home station, of a battery replacement station (20) a frequency of use of which by the user is higher than a prescribed frequency threshold value (A).

5. The method of controlling battery replacement according to claim 1 or 2, further comprising giving the user a notification when the user uses or books a battery replacement station (20) registered as the home station in other electrically powered vehicles (10), the number of other electrically powered vehicles (10) being smaller than a prescribed second number threshold value (B), the notification being a notification that encourages registration of the used or booked battery replacement station (20) as the home station.

6. A battery replacement control system (1) comprising:
a first processing apparatus (22) configured to perform processing for replacing a first battery (11) mounted on at least one electrically powered vehicle (10) and a second battery (21) stored at each of a plurality of battery replacement stations (20) with each other; and
a second processing apparatus (100) configured to (i) receive from a user of the electrically powered vehicle (10), a request for registration as a home station, of a specific battery replacement station (20) among the plurality of battery replacement stations (20) and (ii) determine a first incentive to be granted to the user when the first processing apparatus (22) causes replacement of the second battery (21) at the home station and the first battery (11) with each other, wherein
the second processing apparatus (100) is configured to set the first incentive to be greater than a second incentive to be granted to the user when the first processing apparatus (22) causes replacement of the second battery (21) at a battery replacement station (20) other than the home station and the first battery (11) with each other.

7. The battery replacement control system (1) according to claim 6, wherein
the second processing apparatus (100) is configured to control the first processing apparatus (22) such that a degree of deterioration of the second battery (21) that replaces the first battery (11) of the electrically powered vehicle (10) based on the first incentive is lower than a degree of deterioration of the second battery (21) that replaces the first battery (11) of the electrically powered vehicle (10) based on the second incentive.
